# EUROPÄISCHE PATENTSCHRIFT

(11) **EP 0 487 495 B1**
(45) Veröffentlichungstag und Bekanntmachung des Hinweises auf die Patenterteilung: **12.04.1995**
(21) Anmeldenummer: 91890283.4
(22) Anmeldetag: 15.11.1991
(51) Int. Cl.: C21C 5/56, F27D 3/00

(54) **Anlage zur Herstellung von flüssigen Metallen**
Plant for the production of molten metals
Installation pour la production de métaux fondus

(30) Priorität: 19.11.1990 AT 2334/90
(43) Veröffentlichungstag der Anmeldung: 27.05.1992
(73) Patentinhaber: VOEST-ALPINE Industrieanlagenbau GmbH, A-4020 Linz (AT)
(72) Erfinder: Pirklbauer, Wilfried, Dipl.-Ing. Dr., A-4491 Niederneukirchen (AT); Weber, Alfred, A-4222 Luftenberg (AT); Auer, Johann, Ing., A-4490 St. Florian (AT)
(74) Vertreter: Wolfram, Gustav, Dipl.-Ing.

(56) Entgegenhaltungen:
- EP-A- 0 321 443
- DE-C- 880 636
- FR-A- 1 085 309
- US-A- 3 022 990

## Beschreibung

Die Erfindung betrifft eine Anlage zur Herstellung von flüssigen Metallen, insbesondere von Stahl, mit einem Schmelzgefäß in dessen unterem Endbereich eine Abstichöffnung für geschmolzenes Metall vorgesehen ist, in dessen einen Ofenschacht bildender Wandung Brenner sowie gegebenenfalls sauerstoffhältige Gase zuführende Leitungen eingesetzt sind und an dessen oberem Ende eine Chargiereinrichtung sowie eine die entstehenden Abgase aufnehmende Gasableitung einmünden.

Eine Anlage dieser Art ist aus der EP-A 321 443 bekannt. Das Schmelzgefäß ist bei der bekannten Anlage als kippbarer Schrott- und/oder Roheisen im kontinuierlichen Verfahren aufschmelzender konverter ausgebildet. Die Chargierung des Schrotts erfolgt hiebei über eine Schrottschurre, die Gasableitung über ein Konverterabgassystem.

Problematisch bei herkömmlichen Schmelzgefäßen ist der Chargierbereich, insbesondere beim Einbringen von stückigem Chargiergut, wie Automobilschrott in Form von Paketen. Für eine kontinuierliche Einschmelzung ist aus Gründen der Temperaturkonstanz und zur Erzielung eines gleichmäßigen Schmelzenabflusses eine kontinuierliche Chargierung zweckmäßig. Hierbei fällt zudem das Chargiergut unter Schonung der Ausmauerung des Schmelzgefäßes bereits stets auf einen im Inneren des Schmelzgefäßes vorhandenen Chargier-Einsatz. Eine weitere Problematik ist darin zu sehen, daß der Austritt von Abgas beim Chargieren nur sehr schwierig zu vermeiden ist, insbesondere bei einem kontinuierlichen Chargiervorgang. Der Vermeidung eines Gasaustrittes kommt insbesondere dann besondere Bedeutung zu, wenn minderwertiger oder stark verunreinigter Schrott eingeschmolzen werden soll.

Die Erfindung bezweckt die Vermeidung dieser Nachteile und Schwierigkeiten und stellt sich die Aufgabe, eine Anlage der eingangs beschriebenen Art zu schaffen, bei der das Chargiergut, insbesondere Schrott, kontinuierlich in das Schmelzgefäß eingebracht werden kann, wobei Jedoch der Austritt von Abgasen an der Chargiereinrichtung zuverlässig vermieden wird.

Diese Aufgabe wird erfindungsgemäß dadurch gelöst, daß sowohl die Gasableitung als auch die Chargiereinrichtung seitlich und einander etwa diametral gegenüberliegend in das obere Ende des Ofenschachtes einmünden, wobei die Chargiereinrichtung in eine von einem Gasvorhang bestrichene Chargieröffnung ragt und unterhalb der Chargieröffnung eine Einlaufrutsche für das Chargiergut vorgesehen ist, die gegen das Zentrum des Ofenschachtes gerichtet ist und einen gegenüber der Wandung des Ofenschachtes nasenförmig nach innen ragenden Vorsprung bildet, an den ein gegen den unteren Endbereich des Ofenschachtes geneigter und in die Wandung des Ofenschachtes überleitender Wandabschnitt anschließt.

Gemäß einer bevorzugten Ausführungsform ist das untere Ende der Einlaufrutsche in einem Höhenbereich, in dem sich der untere Rand der Einmündung der Gasableitung in den Ofenschacht befindet oder knapp darunter angeordnet.

Vorteilhaft ist zur Bildung des Gasvorhanges eine die Chargieröffnung peripher umgebende Gasleitung mit in das Innere des Ofenschachtes gerichteten Gasauslässen vorgesehen.

Zweckmäßig ist die Chargiereinrichtung von einer durch die Chargieröffnung bis in den Anfangsbereich der Einlaufrutsche ragenden Stetig-Fördereinrichtung, wie einer Vibrationsrinne, gebildet.

Als zusätzliche Sicherheitsmaßnahme ist vorteilhaft die Fördereinrichtung von einer an die Chargieröffnung anschließenden Einhausung umgeben.

Zu einer optimalen Haltbarkeit ist zweckmäßig die Einlaufrutsche von einer massiven Stahlplatte, wie einer Stahlbramme, gebildet.

Ein zusätzlicher Schutz gegen Gasaustritt ist vorteilhaft von einer außerhalb der Chargieröffnung vorgesehenen Vorhangschürze gebildet.

Eine bevorzugte Ausführungsform ist dadurch gekennzeichnet, daß in der Einhausung eine Luft-Absaugung vorgesehen ist, die leitungsmäßig mit der die Chargieröffnung umgebenden Gasleitung verbunden ist, wodurch als weitere Sicherheitsmaßnahme gegen einen Gasaustritt in der Einhausung ein Unterdruck erzeugt werden kann. Hierdurch kann auch ein stark pulsierender Abgasanfall beherrscht werden.

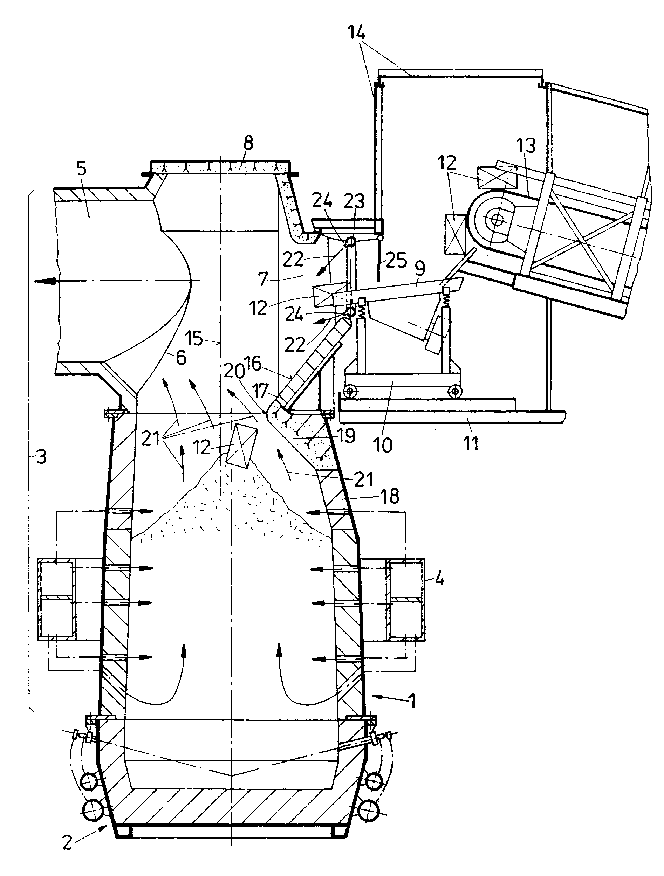

Die Erfindung ist nachfolgend an einem Ausführungsbeispiel anhand der Zeichnung, die eine Anlage zum kontinuierlichen Verschmelzen von flüssigem Stahl bzw. einem Stahlvorprodukt im Schnitt zeigt, näher erläutert.

Mit 1 ist ein ortsfest abgestütztes feuerfest ausgekleidetes Schmelzgefäß bezeichnet, welches einen Bodenteil 2 und einen an den Bodenteil anschließenden Ofenschacht 3 umfaßt. Der Ofenschacht 3 des Schmelzgefäßes ist von einem ringförmigen Rahmen 4, der an einer Bühne ortsfest befestigt ist, umgeben, an dem er über nicht näher dargestellte Pratzen abgestützt ist. Dieser ringförmige Rahmen 4 ist hohl ausgebildet, wobei der Hohlraum zur Zuführung der für den Betrieb des Schmelzgefäßes 1 erforderlichen Medien (Brenngase, sauerstoffhältige Gase etc.) dient.

In das obere Ende des Ofenschachtes 3 mündet seitlich eine Gasableitung 5 ein. Ungefähr diametral gegenüberliegend zur Einmündung 6 der Gasableitung 5 ist eine Chargieröffnung 7 angeordnet. Nach oben hin ist der Ofenschacht 3 von einem Deckel 8 geschlossen.

In die Chargieröffnung 7 ragt eine als Vibrationsrinne ausgebildete Stetig-Fördereinrichtung 9, die auf einem Wagen 10 abgestützt ist, der zur Ofenwartung in horizontaler Richtung auf einer Chargierbühne 11 verfahrbar ist. Das zu chargierende Gut, wie z.B. die Schrottpakete 12, gelangen zur Vibrationsrinne 9 über ein Förderband 13. Sowohl das Förderband 13, wie auch die Vibrationsrinne 9 sind von einer Einhausung 14 umgeben, welche Einhausung 14 an die Chargieröffnung 7 dicht anschließt.

Unterhalb der Chargieröffnung 7 ist eine schräg gegen das Zentrum 15 des Ofenschachtes 3 gerichtete Einlaufrutsche 16, die von einer massiven Stahlplatte, wie einer Bramme, gebildet ist, vorgesehen. Über diese Einlaufrutsche 16 gelangt das Chargiergut 12 in etwa in das Zentrum 15 des Ofenschachtes 3. An das untere Ende 17 der Einlaufrutsche 16 schließt eine dieses Ende 17 mit der Wandung 18 des Ofenschachtes 3 verbindender und gegen den Boden des Schmelzgefäßes gerichteter Wandteil 19 an.

Dieser Wandteil 19 bildet mit der Einlaufrutsche einen weit in das Innere des Ofenschachtes 3 hineinragenden nasenartigen Vorsprung 20, durch den die im Schmelzgefäß 1 entstehenden und in das Schmelzgefäß eingeleiteten Gase in Richtung der Pfeile 21 zu der dem Vorsprung 20 gegenüberliegenden Mündung 6 der Gasableitung 5 geleitet werden. Das untere Ende 17 der Einlaufrutsche 16 bzw. der an dieses Ende anschließende Wandteil 19 befinden sich in einer Höhe knapp unterhalb des unteren Randes der Einmündung 6 der Gasableitung 5.

Die Chargieröffnung 7 ist von einem Gasvorhang 22 gedichtet. Zur Bildung dieses Gasvorhanges 22 ist entlang des Randes der Chargieröffnung 7 eine Gaszuführleitung 23 vorgesehen, die gegen das Innere des Ofenschachtes 3 gerichtete Gasauslässe 24 aufweist, durch die das zugeführte Gas - vorzugsweise aus der Einhausung 14 mittels einer Absaugung angesaugte Luftschräg gegen das Zentrum 15 des Ofenschachtes 3 strömt.

Dieser Gasvorhang 22 gewährleistet gemeinsam mit dem nasenartigen Vorsprung 20 eine sichere Leitung der Ofenabgase in die Gasableitung 5. Als zusätzliche Maßnahme können noch außerhalb der Chargieröffnung 7 angeordnete Schürzen bzw. Vorhänge 25 vorgesehen sein, sodaß auch bei pulsierendem Abgasanfall kein Austritt von Abgas, sondern eine kurzzeitige Speicherung des Abgases im oberen Teil des Ofenschachtes 3 möglich ist.

Die im Schmelzgefäß entstehende Schmelze wird über eine nicht dargestelle Abstichöffnung kontinuierlich abgezogen und gegebenenfalls in ein metallurgisches Gefäß zur Nachbehandlung weitergeleitet.

## Patentansprüche

1. Anlage zur Herstellung von flüssigen Metallen, insbesondere von Stahl, mit einem Schmelzgefäß (1) in dessen unterem Endbereich (2) eine Abstichöffnung für geschmolzenes Metall vorgesehen ist, in dessen einen Ofenschacht (3) bildender Wandung (18) Brenner sowie gegebenenfalls sauerstoffhältige Gase zuführende Leitungen eingesetzt sind und an dessen oberem Ende eine Chargiereinrichtung (9) sowie eine die entstehenden Abgase aufnehmende Gasableitung (5) einmünden, dadurch gekennzeichnet, daß sowohl die Gasableitung (5) als auch die Chargiereinrichtung (9) seitlich und einander etwa diametral gegenüberliegend in das obere Ende des Ofenschachtes einmünden, wobei die Chargiereinrichtung (9) in eine von einem Gasvorhang (22) bestrichene Chargieröffnung ragt und unterhalb der Chargieröffnung (7) eine Einlaufrutsche (16) für das Chargiergut (12) vorgesehen ist, die gegen das Zentrum (15) des Ofenschachtes (3) gerichtet ist und einen gegenüber der Wandung (18) des Ofenschachtes (3) nasenförmig nach innen ragenden Vorsprung (20) bildet, an den ein gegen den unteren Endbereich des Ofenschachtes (3) geneigter und in die Wandung (18) des Ofenschachtes (3) überleitender Wandabschnitt (19) anschließt.

2. Anlage nach Anspruch 1, dadurch gekennzeichnet, daß das untere Ende (17) der Einlaufrutsche (16) in einem Höhenbereich, in dem sich der untere Rand der Einmündung (6) der Gasableitung (5) in den Ofenschacht (3) befindet oder knapp darunter angeordnet ist.

3. Anlage nach Anspruch 1 oder 2, dadurch gekennzeichnet, daß zur Bildung des Gasvorhanges (22) eine die Chargieröffnung (7) peripher umgebende Gasleitung (23) mit in das Innere des Ofenschachtes (3) gerichteten Gasauslässen (24) vorgesehen ist.

4. Anlage nach einem oder mehreren der Ansprüche 1 bis 3, dadurch gekennzeichnet, daß die Chargiereinrichtung von einer durch die Chargieröffnung (7) bis in den Anfangsbereich der Einlaufrutsche ragenden Stetig-Fördereinrichtung (9), wie einer Vibrationsrinne, gebildet ist.

5. Anlage nach einem oder mehreren der Ansprüche 1 bis 4, dadurch gekennzeichnet, daß die Fördereinrichtung (9) von einer an die Chargieröffnung (7) anschließenden Einhausung (14) umgeben ist.

6. Anlage nach einem oder mehreren der Ansprüche 1 bis 5, dadurch gekennzeichnet, daß die Einlaufrutsche (16) von einer massiven Stahlplatte, wie einer Stahlbramme, gebildet ist.

7. Anlage nach einem oder mehreren der Ansprüche 1 bis 6, dadurch gekennzeichnet, daß außerhalb der Chargieröffnung (7) mindestens eine Vorhangschürze (25) vorgesehen ist.

8. Anlage nach einem oder mehreren der Ansprüche 5 bis 7, dadurch gekennzeichnet, daß in der Einhausung eine Luft-Absaugung vorgesehen ist, die leitungsmäßig mit der die Chargieröffnung (7) umgebenden Gasleitung (23) verbunden ist.

## Claims

1. A plant for the production of molten metals, in particular steel, including a melting vessel (1) in whose lower end region (2) a tap opening is provided for molten metal, in whose wall (18) defining a furnace shaft (3) burners as well as possibly ducts supplying oxygen-containing gases are inserted and on whose upper end a charging means (9) as well as a gas evacuation duct (5) receiving the offgases forming enter, characterised in that both the gas evacuation duct (5) and the charging means (9) run into the upper end of the furnace shaft laterally and approximately diametrically opposite each other, wherein the charging means (9) projects into a charging opening brushed over by a gas curtain (22) and an intake chute (16) for the charging material (12) is provided below the charging opening (7) in a manner directed towards the center (15) of the furnace shaft (3), which intake chute forms a projection (20) protruding inwardly like a nose relative to the wall (18) of the furnace shaft (3) and followed by a wall section (19) inclined relative to the lower end region of the furnace shaft (3) and passing over into the wall (18) of the furnace shaft (3).

2. A plant according to claim 1, characterised in that the lower end (17) of the intake chute (16) is arranged on a height level on which the lower rim of the mouth (6) of the gas evacuation means (5) into the furnace shaft (3) is located, or slightly therebelow.

3. A plant according to claim 1 or 2, characterised in that a gas duct (23) peripherally surrounding the charging opening (7) is provided to form the gas curtain (22), including gas outlets (24) directed into the interior of the furnace shaft (3).

4. A plant according to one or several of claims 1 to 3, characterised in that the charging arrangement is comprised of a continuous conveying means (9), such as a vibrating channel, which reaches through the charging opening (7) as far as to the starting region of the intake chute.

5. A plant according to one or several of claims 1 to 4, characterised in that the conveying means (9) is surrounded by an enclosure (14) following the charging opening (7).

6. A plant according to one or several of claims 1 to 5, characterised in that the intake chute (16) is formed by a massive steel plate, such as a steel slab.

7. A plant according to one or several of claims 1 to 6, characterised in that at least one curtain-apron (25) is provided externally of the charging opening (7).

8. A plant according to one or several of claims 5 to 7, characterised in that an air suction means is provided within the enclosure, which is in flow connection with the gas duct (23) surrounding the charging opening (7).

## Revendications

1. Installation pour la production de métaux fondus, en particulier d'acier, comportant un récipient de fusion (1), une ouverture de coulée pour le métal fondu étant prévue dans la région d'extrémité inférieure (2) dudit récipient, et un brûleur ainsi que, le cas échéant, des conduites d'amenée de gaz contenant de l'oxygène étant mis en place dans la paroi (18) de ce récipient, qui forme un puits de four (3), et un dispositif de chargement (9) ainsi qu'une conduite de sortie de gaz (5) recevant les gaz d'échappement qui se produisent débouchant à l'extrémité supérieure du récipient, caractérisée en ce que tant la conduite de sortie de gaz (5) que le dispositif de chargement (9) débouchent latéralement à peu près diamétralement à l'opposé l'un à l'autre dans l'extrémité supérieure du puits de four, le dispositif de chargement (9) pénétrant dans une ouverture de chargement balayée par un rideau de gaz (22), et en ce qu'il est prévu au-dessous de l'ouverture de chargement (7) une goulotte d'entrée (16) pour le matériau à charger (12), qui est dirigée vers le centre (15) du puits de four (3) et qui forme à l'opposé de la paroi (18) du puits de four (3) une saillie (20) pénétrant en forme de bec vers l'intérieur, à laquelle se raccorde une section de paroi (19) inclinée en sens opposé à la région d'extrémité inférieure du puits de four (3) et se transformant dans la paroi (18) du puits de four (3).

2. Installation selon la revendication 1, caractérisée en ce que l'extrémité inférieure (17) de la goulotte d'entrée (16) se trouve en hauteur dans une zone dans laquelle se trouve le bord inférieur de l'embouchure (6) de la conduite de sortie de gaz (5) dans le puits de four (3), ou en ce qu'elle est agencée un peu en-dessous de celle-ci.

3. Installation selon l'une ou l'autre des revendications 1 et 2, caractérisée en ce que pour la formation du rideau de gaz (22), on prévoit une conduite de gaz (23) entourant périphériquement l'ouverture de chargement (7), comportant des sorties de gaz (24) dirigées vers l'intérieur du puits de four (3).

4. Installation selon l'une ou plusieurs des revendications 1 à 3, caractérisée en ce que le dispositif de chargement est formé par un dispositif d'alimentation en continu (9), telle qu'une rigole vibrante, pénétrant à travers l'ouverture de chargement (7) jusqu'à la région de départ de la goulotte d'entrée.

5. Installation selon l'une ou plusieurs des revendications 1 à 4, caractérisée en ce que le dispositif d'alimentation (9) est entouré par une enveloppe (14) qui se raccorde à l'ouverture de chargement (7).

6. Installation selon l'une ou plusieurs des revendications 1 à 5, caractérisée en ce que la goulotte d'entrée (16) est formée par un plateau d'acier massif, comme une brame d'acier.

7. Installation selon l'une ou plusieurs des revendications 1 à 6, caractérisée en ce qu'en dehors de l'ouverture de chargement (7), il est prévu au moins un tablier-rideau (25).

8. Installation selon l'une ou plusieurs des revendications 5 à 7, caractérisée en ce que dans l'enveloppe il est prévu une aspiration d'air qui est reliée en termes d'écoulement à la conduite de gaz (23) entourant l'ouverture de chargement (7).
